# EUROPÄISCHE PATENTSCHRIFT

(11) **EP 3 179 860 B1**
(45) Veröffentlichungstag und Bekanntmachung des Hinweises auf die Patenterteilung: **14.02.2018**
(21) Anmeldenummer: 16751258.1
(22) Anmeldetag: 05.08.2016
(51) Int. Cl.: A22C 9/00, A22C 17/00, A23B 4/28, A23L 13/70

(54) **PÖKELMASCHINE MIT ERKENNUNGSEINRICHTUNG**
PICKLE MACHINE WITH DETECTION DEVICE
MACHINE DE SAUMURAGE AVEC SYSTÈME DE DÉTECTION

(30) Priorität: 13.08.2015 DE 102015113377
(43) Veröffentlichungstag der Anmeldung: 21.06.2017
(73) Patentinhaber: Günther Maschinenbau GmbH, 64807 Dieburg (DE)
(72) Erfinder: HÖRETH, Jens, 64395 Brensbach (DE); SCHWEBEL, Jörg, 64405 Fischbachtal (DE)
(74) Vertreter: Müller, Eckhard
(86) Internationale Anmeldenummer: PCT/EP2016/068728
(87) Internationale Veröffentlichungsnummer: WO 2017/025453

(56) Entgegenhaltungen:
- EP-A1- 0 479 447
- EP-A1- 0 561 105
- DE-U1-202007 012 087
- US-A1- 2002 152 901
- US-B1- 6 488 668

## Beschreibung

Die Erfindung betrifft eine Pökelmaschine mit Erkennungseinrichtung zum Detektieren einer Nadelverstopfung, einer Nadelbeschädigung und/oder eines Nadelbruches.
Aus der DE 197 19 414 A1, der EP 0 845 215 A1 oder der DE 603 08 216 T2 sind weitgehend standardisierte Prozesse zum Injizieren einer Flüssigkeit in ein Lebensmittel bekannt. Diese Vorrichtungen sind mit einer Gruppe von Hohlnadeln ausgerüstet, die in wiederholenden Verarbeitungszyklen in die Lebensmittel periodisch eingestochen werden, um Flüssigkeit zu injizieren, insbesondere Lake. Nach der Injektion werden die Hohlnadeln wieder herausgezogen.
Aus DE 101 24 292 A1 ist eine ähnlich aufgebaute Pökelmaschine bekannt. Das Pökelgut wird auf der Auflage eines Förderbandes zugeführt. Die Nadeln werden zusammen mit einem Niederhalter abgesenkt während das Förderband anhält. Der Niederhalter legt sich auf die Oberseite des Pökelgutes, während die Nadeln tiefer in das Pökelgut eindringen. Beim Herausziehen der Nadeln hält der Niederhalter durch Gegendruck das Pökelgut unten auf der Auflage des Förderbandes.
Aus DE 10 2010 019 884 A1 ist eine Pökelmaschine mit einer Messvorrichtung zum Erfassen des Volumens und/oder der Höhe des Pökelgutes und/oder eines Belegungsgrades der Fördereinrichtung bekannt. Messsensoren bestimmen den Belegungsgrad aufgrund von Änderungen des elektrischen und/oder magnetischen Feldes der Sensoren bei verschiedenen Injektionsabschnitten, wie bei der Annäherung des auf einer Fördereinrichtung befindlichen Pökelgutes an die Injektionsnadeln.
Aus EP 0 561 105 A1 ist eine Pökelmaschine mit einer Vielzahl von Injektionsnadeln bekannt, welche mittels eines Motors bewegt werden. Ein von einem Eingangssignal eines Detektors abhängiger Regler steuert die Drehzahl des Motors, so dass die Abwärtsgeschwindigkeit der Nadeln auch im Eindringbereich im Pökelgut konstant gehalten wird.

Bei den Injektionsvorgängen kommt es immer wieder zu Beschädigungen der Nadeln, beispielsweise aufgrund von Abnutzung oder weil die Nadel auf einen Knochen trifft. Mitunter kann es zu einem Nadelbruch kommen, indem ein Stück der Nadel, in der Regel die Nadelspitze, abbricht. Besonders gefährlich ist, wenn das abgebrochene Nadelstück im Pökelgut stecken bleibt. Deshalb werden Detektionseinrichtungen eingesetzt, welche das Pökelgut im Anschluss an den Injektionsvorgang untersuchen. Im Falle, dass ein Nadelstück detektiert wird, stoppt die Maschine, damit dann das betroffene Pökelgut identifiziert und aussortiert werden kann.

In der Praxis ist nicht immer sichergestellt, dass bei einem Nadelbruch Teile der beschädigten Nadel detektiert werden. Insbesondere wenn die abgebrochenen Nadelteile klein sind oder sich beispielsweise in unmittelbarer Nähe zu einem Knochenstück im Pökelgut befinden, werden diese von herkömmlichen Detektoren nicht erfasst. Folglich wird die Maschine nicht gestoppt. Das Pökelgut wird auf der Auflage eines Förderbandes weitertransportiert und kann in den Vertrieb gelangen. Dies stellt eine große Gefahr für die Gesundheit der Verbraucher dar, wenn solche Nadelteile mit dem Lebensmittel aufgenommen werden.

Auch kann es vorkommen, dass Nadeldefekte zwar detektiert werden, aber aufgrund der zeitlichen Verzögerung zwischen Nadelbruch und Detektion das kritische Pökelgut nicht sofort identifiziert werden kann und somit eine größere Menge an Pökelgut aussortiert werden muss, unter Umständen ganze Chargen. Denn, solange die Maschine nicht stoppt, wird stets weiteres Pökelgut auf dem Förderband zur Injektion angeliefert, injiziert und weitertransportiert. Im schlimmsten Fall muss Pökelgut sogar aus dem Handel zurückgerufen werden, was auch einen außerordentlichen Imageschaden zur Folge hat und sich äußerst nachteilig für den Hersteller auswirkt.

Auch können bei den bekannten Pökelmaschinen sich anbahnende Nadelbeschädigungen, beispielsweise Risse oder Deformationen der Nadel und/oder Nadelverstopfungen nicht automatisch detektiert werden, so dass sowohl das betroffene Pökelgut als auch die defekte Nadel nicht schnell genug identifiziert und aussortiert bzw. ausgetauscht werden können.

Es ist daher Aufgabe der vorliegenden Erfindung, eine Pökelmaschine mit einer Erkennungseinrichtung anzugeben, die bei einem Injektionsvorgang beschädigte Nadeln schnell identifiziert.

Die Aufgabe wird durch eine Pökelmaschine mit den Merkmalen des Anspruches 1 gelöst. Vorteilhafte Ausgestaltungen der Erfindung ergeben sich aus den Unteransprüchen sowie der nachfolgenden Beschreibung und den Figuren.

Die Pökelmaschine zum Einspritzen von Fluid, insbesondere Lake, in ein Pökelgut weist einen Nadelbalken und eine Vielzahl daran angeordneter Injektionsnadeln auf, die üblicherweise als Hohlnadeln ausgebildet sind und in der Regel aus Edelstahl bestehen. Erfindungsgemäß ist zum Detektieren einer Nadelverstopfung, einer Nadelbeschädigung und/oder eines Nadelbruches eine Erkennungseinrichtung vorgesehen, welche mindestens einen Sensor aufweist, dessen Messwert aus der Relativbewegung zwischen Nadel und Sensor resultiert.

Dadurch ist bei Nadelbrüchen eine sichere Detektion auch von sehr kleinen Nadelteilen erzielbar, so dass bei einem Nadelbruch und einer sich damit ändernden Länge der Nadel der korrespondierende Messwert präzise Informationen auf eine Beschädigung der Nadel gibt. Der Sensor detektiert auch geringste Veränderungen der Nadel, so dass sehr zuverlässige Ergebnisse erzielt werden können.

Bei jedem Injektionsvorgang von Lake in das Pökelgut messen die Sensoren Werte, die Informationen über den Zustand der Nadeln geben. Üblicherweise ist die verwendete Lake salzhaltig und somit leitfähig. Aufgrund dieser Leitfähigkeit sind auch Strömungsverhältnisse in der Nadel messbar und von den Sensoren detektierbar. Sollte es zu einer Beschädigung oder Verstopfung einer Nadel kommen, ändern sich diese Messwerte und die Erkennungseinrichtung liefert ein Fehlersignal an die Steuereinrichtung der Maschine für einen automatischen Stopp.
Alternativ oder zusätzlich kann das Fehlersignal dem Bediener der Pökelmaschine angezeigt werden, beispielsweise durch ein akustisches Signal oder auf einem Display. Durch die unmittelbare Erkennung einer Beschädigung oder Verstopfung der Nadel wird die Pökelmaschine sofort gestoppt, so dass das betroffene Pökelgut schnell identifiziert und aussortiert sowie größerer Ausschuss vermieden wird.

Nach einer ersten besonders vorteilhaften Ausführungsform der erfindungsgemäßen Pökelmaschine ist vorgesehen, dass jeder Nadel jeweils ein Sensor zugeordnet ist. Auf diese Weise kann jede der am Nadelbalken angeordneten Nadeln im Hinblick auf mögliche Verstopfungen oder Beschädigungen analysiert werden, so dass insgesamt eine schnelle Identifikation einer beschädigten Nadel und von verunreinigtem Pökelgut möglich ist und die beschädigte oder verstopfte Nadel umgehend ausgetauscht werden kann. Dadurch werden die Standzeit der Pökelmaschine und damit verbundene Gewinneinbußen drastisch reduziert.

Erfindungsgemäß ist der mindestens eine Sensor in einem Niederhalter der Pökelmaschine zum Niederhalten des Pökelgutes beim Herausziehen der Nadeln angeordnet. Eine Anordnung des Sensors direkt an der Nadel wäre zwar ebenfalls möglich, dies ist jedoch für bestimmte Sensortypen aufgrund deren baulichen Größe nachteilig. Vorteilhaft ist die Anordnung der Sensoren im oder am Niederhalter des Pökelgutes, da die Sensoren dann nicht in das Pökelgut eingeführt werden. Ferner sind die Sensoren im Niederhalter sicher gehalten. Die entsprechenden Anschlussleitungen für elektrische und datentechnische Signalübertragung können ebenfalls vorteilhaft am oder im Niederhalter angeordnet werden.

Nach einer weiteren vorteilhaften Ausgestaltung der Erfindung ist vorgesehen, dass der Niederhalter zweigeteilt ist und der Sensor zwischen Teilen des Niederhalters angeordnet ist. Dadurch lassen sich die Sensoren leicht montieren. Auch die für die elektrische Versorgung der Sensoren notwendigen Leitungen sowie die Datenleitungen können in einem zweigeteilten Niederhalter leicht platziert und verlegt werden, wodurch auch die Wartung vereinfacht wird. Denkbar ist auch, dass die Sensoren zusammen mit dem Niederhalter vergossen werden, insbesondere kann Epoxidharz zur Fixierung verwendet werden. Auch dadurch ist ein Schutz der Sensoren und Leitungen vor Verschmutzung und salzbeladener Korrosion durch aggressive Lake gewährleistet.

Bei einer besonderen Ausführungsform der erfindungsgemäßen Pökelmaschine ist der Sensor als berührungsloser Sensor, insbesondere als optischer oder als kapazitiver Sensor ausgebildet. Ein kapazitiver Sensor kann mit einer oder mehreren Elektroden zur Überwachung der Nadeln ausgestattet sein. Diese Sensoren sind konzipiert für berührungslose Messungen, was insbesondere in Reinräumen, wie bei der Pökelgutverarbeitung vorteilhaft ist. Ein optischer Sensor ist ebenfalls für berührungslose Abstandmessungen mit vergleichsweise großer Reichweite vorgesehen. Ferner zeichnen sich optische Sensoren, wie beispielsweise Laser-Distanz-Sensoren, CMOS- oder CCD-Kameras, durch hohe Präzision beim Messen aus.

Bevorzugt ist der Sensor als induktiver Sensor ausgebildet, wobei die Änderung des Induktionsfeldes des induktiven Sensors mit einer Verstopfung, Beschädigung und/oder einem Bruch der Nadel korreliert ist. Induktive Sensoren sind verschleiß- und wartungsfrei und zeichnen sich durch eine besonders kompakte Bauform aus. Darüber hinaus sind diese Sensoren für den Serieneinsatz geeignet, wodurch die Herstellungskosten der Maschine reduziert werden können. Ferner ist die Genauigkeit der Messung sehr präzise und kann bei etwa einem Mikrometer liegen. Induktive Sensoren eignen sich daher in besonderem Maße für den rauen Einsatz bei Pökelmaschinen.

Die induktiven Sensoren können auf einem Verfahren zur induktiven Wegemessung, auch Linear Variabler Differential-Transformator (LVDT) genannt, basieren. Dabei sind beidseitig einer Primärspule bzw. Erregerspule zwei Sekundärspulen symmetrisch angebracht. Durch das Anlegen einer Wechselspannung mit konstanter Amplitude und konstanter Frequenz an die Primärspule des Sensors wird ein induktives Wechselfeld erzeugt. Die mechanisch bewegliche Nadel verändert die Kopplungsfaktoren zwischen den Spulen. Es wird ein Signal in den Sekundärspulen des Sensors induziert, dessen Stärke von der Position der Nadel abhängt. Solche induktiven Sensoren sind hinreichend bekannt, beispielsweise aus Wikipedia und werden unter anderem durch die Micro-Epsilon Messtechnik GmbH, Ortenburg, vertrieben.

Der Sensor kann umfangseitig an der jeweils zugeordneten Nadel angeordnet sein. Dadurch bewegt sich die Nadel bei einem Messvorgang innerhalb des Sensors und die Anordnung kann im Falle des LVDT in axialer Richtung symmetrisch sein. Wenn sich die Nadel in einer Mittellage befindet, heben sich die Spannungen der Sekundärspulen gegenseitig auf und es entsteht kein Ausgangssignal. Wird die Nadel entlang der Rotationssymmetrieachse verschoben, so liegt eine ungleiche magnetische Kopplung vor und es entsteht eine Ausgangsspannung an den Sekundärspulen. Durch eine Korrelation mit der Erregerspannung lässt sich ein Richtungssignal der Nadel erzeugen.

Nach einer besonders vorteilhaften Weiterbildung der Erfindung ist es vorgesehen, dass die Sensoren unter Bildung einer Prüfmatrix in Gruppen aufgeteilt sind, wobei die in Reihe geschalteten Sensoren benachbarter Gruppen einen vorgegebenen Abstand zueinander aufweisen. Hierdurch ist vermieden, dass insbesondere bei induktiven Sensoren und einer sehr großen Dichte der Sensoren, bedingt durch die hohe Anzahl an Nadeln am Nadelbalken, gegenseitige Störeinflüsse auftreten, wenn benachbarte Sensoren gleichzeitig aktiv sind. Bei zu geringem Abstand der in Reihe geschalteten Sensoren entsteht ein starkes Induktionsfeld, so dass dann keine individuelle Erkennung je Nadel mehr möglich ist. Aus diesem Grund ist die Schaltung und Steuerung der Nadeln mittels einer Prüfmatrix vorteilhaft. Denn dadurch können Nadeln gruppenweise geprüft werden, ohne dass sich induktive Felder gegenseitig beeinflussen und Messungen verfälscht werden. Eine hohe Genauigkeit bei der Detektion verstopfter und/oder beschädigter Nadeln ist damit gewährleistet.

Nach einer besonders vorteilhaften Weiterbildung der Erfindung ist es vorgesehen, dass der Abstand zwischen den in Reihe geschalteten Sensoren benachbarter Gruppen mindestens dem doppelten Abstand benachbarter Nadeln entspricht. Insbesondere wenn der Abstand zwischen benachbarten Sensoren aufgrund der großen Dichte der Sensoren sehr gering ist, können durch die vorteilhafte Steuerung der Sensoren negative Beeinflussungen der Induktionsfelder bei gleichzeitiger Schaltung der Nadeln in den Messmodus vermieden werden.

Bei einer besonders vorteilhaften Ausführungsform der Erfindung ist eine Steuereinrichtung vorgesehen, welche bei jedem Detektionsvorgang jeweils nur einen Sensor einer Gruppe aktiviert. Die Messgenauigkeit wird dadurch weiter erhöht. Denn, wie erwähnt, wird das Pökelgut auf einem Förderband durch die Injektionsvorrichtung transportiert. Beim Injektionsvorgang stoppt das Förderband und die Nadeln durchdringen den Niederhalter und tauchen in das Pökelgut zum Injizieren ein. Anschließend wird das injizierte Pökelgut weitertransportiert. Bei der Detektion einer defekten Nadel wird das Förderband gestoppt. Das betroffene Pökelgut wurde folglich höchstens um einige wenige Injektionstakte auf dem Band weitertransportiert.

Wenn einer Gruppe beispielsweise 4 Nadeln zugeordnet sind, kann es höchstens 4 Injektionstakte dauern, bis eine defekte Nadel detektiert und die Maschine gestoppt wird. Das Pökelgut wäre somit um höchstens diese 4 Takte weitertransportiert worden und ließe sich leicht identifizieren. Besonders günstig ist, dass in diesem Fall sich das zu untersuchende, bereits mit Lake injizierte Pökelgut noch in der Fördereinrichtung befindet, das heißt noch nicht in einem Sammelbehälter oder ähnlichem gelagert ist. Dadurch ist der maximale Ausschuss auf nur einige Stücke des Pökelgutes reduziert und betrifft nicht eine ganze Charge, wie es bei den herkömmlichen Detektionsverfahren bei Pökelmaschinen der Fall sein kann.

Nach einer alternativen oder zusätzlichen Ausführungsform dient der Messwert des Sensors zur Bestimmung des jeweiligen Nadelhubes. Durch eine permanente Überwachung der Nadel, insbesondere durch eine Wegstreckenmessung, kann auch eine sich anbahnende Beschädigung bereits frühzeitig erkannt werden, so dass die betroffene Nadel ausgetauscht werden kann, bevor es zu einem Nadelbruch kommt. Denn, wenn der Nadelhub nicht mehr dem ursprünglichen maximalen Hub der Injektionsnadel entspricht, ist das ein Indiz dafür, dass diese Nadel bereits einen Defekt aufweist.

Bei einer vorteilhaften Ausführungsform der Erfindung ist eine Auswerteeinrichtung zur Analyse der Messwerte des Sensors vorgesehen ist, welche die Durchflussmenge von Fluid durch die Nadel angibt. Es ist einerseits möglich, die aktuelle Durchflussmenge durch eine Nadel zu bestimmen, wodurch eine Verstopfung der Nadel sofort feststellbar ist. Darüber hinaus kann mittels der Auswerteeinrichtung auch die gesamte Durchflussmenge in einem bestimmten Zeitabschnitt, beispielsweise seit Einsatz der Nadel in den Nadelbalken, bestimmt werden. Ferner kann die injizierte Menge von Fluid in das Pökelgut angegeben werden, so dass auch insoweit eine Auswertemöglichkeit gegeben ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine mögliche Ausführungsform einer erfindungsgemäßen Pökelmaschine mit einer Erkennungseinrichtung in schematischer Darstellung und
- Fig. 2: eine Anordnung von Nadeln in Gruppen einer Prüfmatrix ebenfalls in schematischer Darstellung.

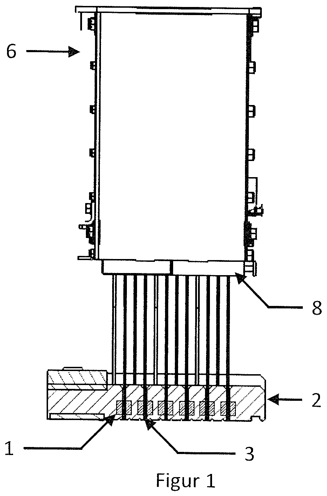

Die Pökelmaschine gemäß Figur 1 dient zum Einspritzen von Lake in ein Pökelgut. Sie weist einen Nadelbalken 6 und eine Vielzahl über eine Nadelbrücke 8 daran angeordneter hohler Injektionsnadeln 3 auf. Die Nadeln 3 bestehen bevorzugt aus Edelstahl. Die Nadelbrücke 8 wird von einer Nadelantriebsvorrichtung zusammen mit den Hohlnadeln 3 auf- und abbewegt. Das Pökelgut wird auf einem Förderband transportiert.

Die Nadeln 3 werden durch einen Niederhalter 2 hindurch geführt, welcher das Pökelgut beim Herausziehen der Nadeln 3 auf der Auflage des Förderbandes niederhält. Der Niederhalter 2 kann mit Hilfe einer Antriebsvorrichtung unabhängig von der Bewegung der Hohlnadeln 3 und der Nadelbrücke 8 auf- und abbewegt werden.

Das Pökelgut wird auf einem Förderband durch die Injektionsvorrichtung transportiert. Der Niederhalter 2 hat Bohrungen, durch die die Nadeln 3 hindurchgehen. Beim Injektionsvorgang stoppt das Förderband und die Nadeln 3 durchdringen den Niederhalter 2 und tauchen in das Pökelgut zum Injizieren ein. Anschließend wird das injizierte Pökelgut weitertransportiert.

In dem hier vorgestellten Ausführungsbeispiel ist der Niederhalter 2 zweigeteilt. Im Sinne der Erfindung ist auch ein einteiliger oder mehrteiliger Niederhalter 2 möglich.

Eine Erkennungseinrichtung 7 zur Detektion von Beschädigungen oder Verstopfungen der Nadeln 3 weist bei dem hier beschriebenen Ausführungsbeispiel einen Sensor 1 auf. Jeder Nadel 3 kann jeweils ein Sensor 1 zugeordnet sein, so dass alle an der Nadelbrücke 8 angeordneten Nadeln 3 mittels der Erkennungseinrichtung überwacht werden. Der Sensor 1 ist innerhalb des zweigeteilten Niederhalters 2 angeordnet und ist umfangseitig an die jeweils zugeordnete Nadel 3 angeordnet, wie aus Fig. 1 und Fig. 3 hervorgeht. Es kann auch vorgesehen sein, dass die Sensoren 1 zusammen mit dem Niederhalter 2 vergossen werden, insbesondere kann Epoxidharz zur Fixierung verwendet werden.

Bei jedem Injektionsvorgang durchstoßen die Nadeln 3 das nicht dargestellte Pökelgut, so dass der vordere Teil der Nadeln 3 den Niederhalter 2 durchdringt und von dem im Niederhalter 2 angeordneten Sensor 1 erfasst werden kann. Ein vom Sensor 1 registrierter Messwert resultiert aus der Relativbewegung zwischen Nadel 3 und Sensor 1. Auf diese Weise wird eine Beschädigung der Nadel 3, insbesondere ein Nadelbruch, unmittelbar identifiziert. Bei der Detektion einer defekten Nadel 3 werden die Maschine und das Förderband gestoppt. Das betroffene Pökelgut wurde dann höchstens um einige wenige Injektionstakte auf dem Förderband weitertransportiert. Die betroffene Nadel 3 kann dann ausgetauscht und verunreinigtes Pökelgut aussortiert werden.

Im vorliegenden Ausführungsbeispiel handelt es sich um einen induktiven Sensor, es kann aber auch ein optischer oder kapazitiver Sensor oder eine Kombination aus verschiedenen Sensoren vorgesehen sein. Eine Änderung des Induktionsfeldes des induktiven Sensors 1 ist mit der Verstopfung, Beschädigung und/oder einem Bruch der Nadel 3 korreliert, so dass in diesem Fall der Sensor 1 ein Fehlersignal abgibt und die Maschine gestoppt wird.

Üblicherweise ist eine große Dichte der Nadeln 3 gegeben. Wie erwähnt, soll jede Nadel 3 von einem Sensor 1 überwacht werden, woraus sich auch eine hohe Anzahl Sensoren 1 ergibt, welche folglich ebenfalls dicht nebeneinander angeordnet sind. Würden alle Sensoren 1 gleichzeitig in Messmodus geschaltet werden, könnte es bei zu geringem Abstand der Sensoren 1 zu gegenseitigen störenden Beeinflussungen der Induktionsfelder und damit zu Fehlmessungen kommen.

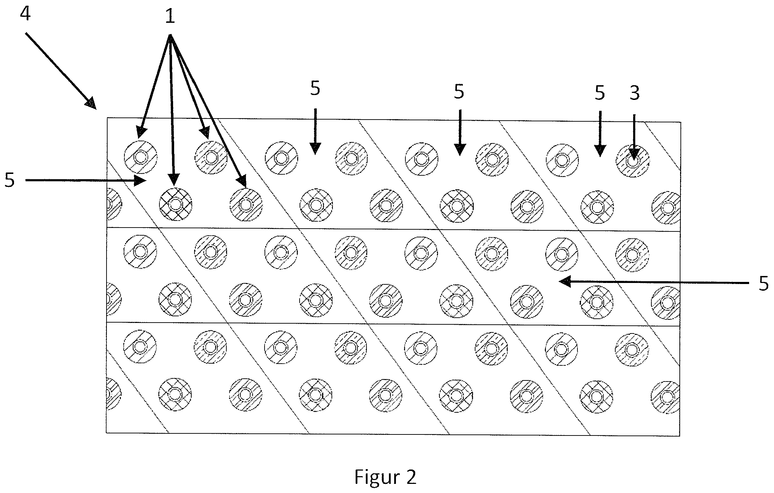

Um dies zu verhindern, sind die Sensoren 1 mit einer Steuervorrichtung unter Bildung einer Prüfmatrix geschaltet. Eine solche Anordnung geht aus Fig. 2 hervor. Beispielhaft sind jeweils vier benachbarte Nadeln 3 zu einer Gruppe 5 zusammengefasst. Jeder Sensor 1 einer Gruppe 5 ist mit jeweils einem Sensor 1 aus den anderen Gruppen 5 in Reihe geschaltet.

Falls der Abstand zwischen den im Messmodus befindlichen Sensoren 1 aufgrund der großen Dichte der Sensoren 1 nicht genügend groß ist, um gegenseitige Beeinflussungen der induktiven Felder zu vermeiden, werden die Sensoren derart geschaltet, dass der Abstand zwischen den in Reihe geschalteten Sensoren 1 benachbarter Gruppen 5 mindestens dem doppelten Abstand benachbarter Nadeln 3 beträgt. Dadurch ist sichergestellt, dass zwischen den aktiven Sensoren 1 genügend Abstand herrscht, damit sich die Induktionsfelder nicht störend gegenseitig beeinflussen.

Im Sinne der Erfindung ist auch denkbar, den Hub der Nadel 3 zu bestimmen. Sollte der gemessene Hub von einem möglichst in einer Auswerteeinrichtung vorgegebenen Wert abweichen, könnte dies auf eine Beschädigung der Nadel 3 hinweisen.

Ferner ist denkbar, die Auswerteeinrichtung zur Messung der Durchflussmenge von Lake durch die Nadel 3 einzusetzen. Die Lake ist salzhaltig und somit leitfähig. Aufgrund dieser Leitfähigkeit sind Strömungsverhältnisse in der Nadel 3 von den Sensoren 1 detektierbar. Einerseits wird dabei die aktuelle Durchflussmenge durch eine Nadel 3 bestimmt, aus welcher eine Verstopfung sowie auch eine anbahnende Verstopfung der Nadel 3 sofort feststellbar ist. Darüber hinaus kann mittels der Auswerteeinrichtung auch die gesamte Durchflussmenge in einem bestimmten Zeitabschnitt, beispielsweise seit Einsatz der Nadel 3 in den Nadelbalken 6 oder pro Charge Pökelgut, bestimmt werden.

Darüber hinaus ist denkbar, auch die Temperatur der Nadeln 3 durch die Sensoren 1 zu bestimmen. Denn die Temperatur korreliert mit einer Änderung der Induktivität.

## Patentansprüche

1. Pökelmaschine zum Einspritzen von Fluid in ein Pökelgut mit einem Nadelbalken (6) und einer Vielzahl daran angeordneter Injektionsnadeln (3) und mit einer Erkennungseinrichtung (7), die zum Detektieren einer Nadelverstopfung, einer Nadelbeschädigung und/oder eines Nadelbruches mindestens einen Sensor (1) aufweist, dessen Messwert aus der Relativbewegung zwischen Nadel (3) und Sensor (1) resultiert, wobei der mindestens eine Sensor (1) an oder in einem Niederhalter (2) der Pökelmaschine zum Niederhalten des Pökelgutes beim Herausziehen der Nadeln (3) angeordnet ist.

2. Pökelmaschine nach Anspruch 1, **dadurch gekennzeichnet, dass** jeder Nadel (3) jeweils ein Sensor (1) zugeordnet ist.

3. Pökelmaschine nach einem der Ansprüche 1 oder 2, **dadurch gekennzeichnet, dass** der Niederhalter (2) zweigeteilt ist und der Sensor (1) zwischen den Teilen des Niederhalters (2) angeordnet ist.

4. Pökelmaschine nach einem der Ansprüche 1 bis 3, **dadurch gekennzeichnet, dass** der Sensor (1) als berührungsloser Sensor, insbesondere als optischer oder kapazitiver Sensor, bevorzugt als induktiver Sensor ausgebildet ist, wobei die Änderung des Induktionsfeldes des induktiven Sensors mit einer Verstopfung, Beschädigung und/oder einem Bruch der Nadel (3) korreliert ist.

5. Pökelmaschine nach einem der Ansprüche 2 bis 4, **dadurch gekennzeichnet, dass** die Sensoren (1) unter Bildung einer Prüfmatrix in Gruppen (5) aufgeteilt sind, wobei die in Reihe geschalteten Sensoren (1) benachbarter Gruppen (5) einen vorgegebenen Abstand zueinander aufweisen.

6. Pökelmaschine nach Anspruch 5, **dadurch gekennzeichnet, dass** der Abstand zwischen den in Reihe geschalteten Sensoren (1) benachbarter Gruppen (5) mindestens dem doppeltem Abstand benachbarter Nadeln (3) entspricht.

7. Pökelmaschine nach Anspruch 5 oder 6, **dadurch gekennzeichnet, dass** eine Steuereinrichtung vorgesehen ist, welche bei jedem Detektionsvorgang jeweils nur einen Sensor (1) einer Gruppe (5) aktiviert.

8. Pökelmaschine nach einem der vorherigen Ansprüche, **dadurch gekennzeichnet, dass** der Messwert des Sensors (1) bei einer Wegstreckenmessung zur Bestimmung des jeweiligen Nadelhubes dient.

9. Pökelmaschine nach einem der vorherigen Ansprüche, **dadurch gekennzeichnet, dass** eine Auswerteeinrichtung zur Analyse der Messwerte des Sensors (1) vorgesehen ist, welche die Durchflussmenge von Fluid durch die Nadel (3) angibt.

## Claims

1. Curing machine for injecting fluid into a cured product, comprising a needle bar (6) and a plurality of injection needles (3) that are arranged thereat, and a detection device (7) which has at least one sensor (1) for detecting a needle blockage, a needle damage, and/or a needle breakage, with the measurement value of the sensor (1) resulting from a relative movement between the needle (3) and the sensor (1), wherein the at least one sensor (1) is arranged at or in a holding-down device (2) of the curing machine for holding down the cured product as the needles (3) are being pulled out.

2. Curing machine according to claim 1, **characterized in that** respectively one sensor (1) is assigned to each needle (3).

3. Curing machine according to any of the claims 1 or 2, **characterized in that** the holding-down device (2) is divided into two parts, and the sensor (1) is arranged between the parts of the holding-down device (2).

4. Curing machine according to any of the claims 1 to 3, **characterized in that** the sensor (1) is embodied as a noncontact sensor, in particular as an optical or capacitive sensor, preferably as an inductive sensor, wherein the change in the inductive field of the inductive sensor is correlated with a blockage, damage and/or a breakage of the needle (3).

5. Curing machine according to any of the claims 2 to 4, **characterized in that** the sensors (1) are divided into groups (5) with a testing matrix being created, wherein the series-connected sensors (1) of neighboring groups (5) have a predefined distance to each other.

6. Curing machine according to claim 5, **characterized in that** the distance between the series-connected sensors (1) of neighboring groups (5) corresponds to at least twice the distance of neighboring needles (3).

7. Curing machine according to claim 5 or 6, **characterized in that** a control device is provided, which activates respectively only one sensor (1) of a group (5) in the course of every detection procedure.

8. Curing machine according to any of the preceding claims, **characterized in that** the measurement value of the sensor (1) in a distance measurement serves for determining the respective needle stroke.

9. Curing machine according to any of the preceding claims, **characterized in that** an evaluator for analyzing the measurement values of the sensor (1) is provided, indicating the flow rate of fluid through the needle (3).

## Revendications

1. Machine de saumurage destinée à injecter un fluide dans un produit saumuré, comprenant une barre à aiguilles (6) et une pluralité d'aiguilles d'injection (3) disposées sur celle-ci, et comportant un dispositif de détection (7) destiné à détecter une obstruction de l'aiguille, un endommagement de l'aiguille et/ou une cassure de l'aiguille, qui comporte au moins un capteur (1) dont la valeur de mesure résulte du mouvement relatif entre l'aiguille (3) et le capteur (1), dans laquelle au moins un capteur (1) est disposé sur ou dans un dispositif de retenue (2) de la machine de saumurage pour retenir le produit saumuré lorsque les aiguilles (3) sont retirées.

2. Machine de saumurage selon la revendication 1, **caractérisée en ce que** chaque aiguille (3) est associée à un capteur (1) respectif.

3. Machine de saumurage selon l'une quelconque des revendications 1 ou 2, **caractérisée en ce que** le dispositif de retenue (2) est divisé en deux parties et **en ce que** le capteur (1) est disposé entre les parties du dispositif de retenue (2).

4. Machine de saumurage selon l'une quelconque des revendications 1 à 3, **caractérisée en ce que** le capteur (1) est réalisé sous la forme d'un capteur sans contact, en particulier sous la forme d'un capteur optique ou capacitif, de préférence sous la forme d'un capteur à induction, dans lequel la variation du champ d'induction du capteur à induction est corrélée avec une obstruction, un endommagement et/ou une cassure de l'aiguille (3).

5. Machine de saumurage selon l'une quelconque des revendications 2 à 4, **caractérisée en ce que** les capteurs (1) sont divisés en groupes (5) pour former une matrice de test, dans laquelle les capteurs (1) connectés en série présentent une distance prédéterminée les uns par rapport aux autres.

6. Machine de saumurage selon la revendication 5, **caractérisée en ce que** la distance entre les capteurs (1) connectés en série de groupes (5) adjacents correspond à au moins deux fois la distance entre des aiguilles (3) adjacentes.

7. Machine de saumurage selon la revendication 5 ou 6, **caractérisée en ce qu'**il est prévu un dispositif de commande qui n'active qu'un seul capteur (1) d'un groupe (5) lors de chaque processus de détection.

8. Machine de saumurage selon l'une quelconque des revendications précédentes, **caractérisée en ce que** la valeur de mesure du capteur (1) sert à déterminer la course respective de l'aiguille lors d'une mesure de la course.

9. Machine de saumurage selon l'une quelconque des revendications précédentes, **caractérisée en ce qu'**il est prévu un dispositif d'évaluation qui indique le débit du fluide à travers l'aiguille (3) pour l'analyse des valeurs de mesure du capteur (1).
